## Europäisches Patentamt

## European Patent Office

## Office européen des brevets

(11) Veröffentlichungsnummer: **0 183 102 B1**

(12) **EUROPÄISCHE PATENTSCHRIFT**

(45) Veröffentlichungstag der Patentschrift:
18.01.89

(21) Anmeldenummer: 85114167.1

(22) Anmeldetag: 07.11.85

(51) Int. Cl.⁴: **F 16 K 31/48**, F 16 K 31/08, G 04 F 3/02

(54) Vorrichtung zur Füllmengensteuerung.

(30) Priorität: 15.11.84 DE 3441749
23.04.85 DE 3514590

(43) Veröffentlichungstag der Anmeldung:
04.06.86 Patentblatt 86/23

(45) Bekanntmachung des Hinweises auf die Patenterteilung:
18.01.89 Patentblatt 89/3

(84) Benannte Vertragsstaaten:
AT BE CH DE FR GB IT LI NL SE

(56) Entgegenhaltungen:
EP-A- 0 091 329
DD-A- 227 766
DE-A- 2 216 089
DE-A- 2 847 751
DE-A- 3 109 943
DE-B- 1 927 045
DE-U- 7 837 050
DE-U- 8 305 892
GB-A- 2 103 391
US-A- 2 312 815
US-A- 2 638 008
US-A- 3 844 311

(73) Patentinhaber: FRIEDRICH GROHE ARMATURENFABRIK GmbH & CO, Hauptstrasse 137, D-5870 Hemer 1 (DE)

(72) Erfinder: Körfgen, Harald, Sümbergstrasse 49, D-5758 Fröndenberg (DE)
Erfinder: Hirsch, Heinz, Batenhorstweg 3, D-4770 Soest (DE)
Erfinder: Petrik, Manfred, Dunkler Weg 14a, D-5750 Menden-Schwitten (DE)
Erfinder: Münzberg, Peter, Mittelstrasse 24, D-4040 Neuss 21 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Vorrichtung zur Steuerung der Füllmenge in Sanitäranlagen mit den im Oberbegriff des Anspruchs 1 angegebenen Merkmalen.

Eine derartige Vorrichtung ist aus der DE-B-19 27 045 bekannt, bei der über ein einstellbares Zeitschaltwerk mit einem Servoventil die Durchflussmenge bestimmbar ist. Als Hauptventilglied ist dabei ein mit Dichtringen versehener Kolben in dem Servoventil verschiebbar angeordnet, wobei das Hilfsventil mit einem aus dem Ventilgehäuse herausgeführten Stössel betätigbar ist.

Wegen unterschiedlicher Drücke und Druckschwankungen in der Wasserzuleitung kann mit der bekannten Einrichtung nur ungenau die Füllmenge bestimmt werden. Darüber hinaus wird durch die Ausbildung des Hauptventilverschlussglieds als Kolben und des Hilfsverschlussglieds mit einem gedichtet aus dem Ventilgehäuse herausgeführten Stössel nicht unerheblich viel Raum benötigt, wobei die Herstellung der Einzelteile und deren Montage kostenintensiv sein dürfte.

Ferner ist aus der DE-B-22 16 089 eine Vorrichtung mit einem Wasserzähler bekannt, mit dem die ausfliessende Wassermenge gemessen und nach dem Erreichen einer voreingestellten Auslaufmenge der Wasserauslauf abgesperrt wird. Ein derartiges Gerät ist jedoch relativ kompliziert und aufwendig in der Fertigung. Darüber hinaus ist es anfällig gegenüber Kalkausscheidungen aus dem durchströmenden Wasser.

Schliesslich sind auch Füllstandssteuerungen bekannt (DE-U-78 37 050), bei denen elektrische Hilfsenergie zur Steuerung der Füllhöhe von Wasser in der Badewanne eingesetzt wird. Hierbei ist jedoch zusätzlich zum Wasseranschluss eine elektrische Zuleitung erforderlich. Ein Elektroanschluss bei Sanitärarmaturen wird darüber hinaus vielfach als bedenklich angesehen oder gar abgelehnt im Hinblick auf eine Personengefährdung.

Der Erfindung liegt die Aufgabe zugrunde, eine relativ genau dosierende Vorrichtung zur Wasserzulaufsteuerung mit einem Zeitschaltwerk zu schaffen, wobei diese Vorrichtung verhältnismässig einfach und robust bauend sowie raumsparend auslegbar sein soll.

Diese Aufgabe wird erfindungsgemäss durch die im kennzeichnenden Teil des Anspruchs 1 angegebenen Merkmale gelöst. Weitere Ausgestaltungen der Erfindung sind in den Ansprüchen 2 bis 14 angegeben.

Die mit der Erfindung erzielbaren Vorteile bestehen insbesondere darin, dass der physikalische Zusammenhang zwischen Druck und Durchflussmenge von der Vorrichtung erfasst und berücksichtigt wird. Eine genaue Dosierung wird durch die Steuerung der Ablaufzeit in Abhängigkeit von dem herrschenden Wasserdruck gewährleistet. Ausserdem ermöglicht das als Membranventil gestaltete Hauptventil und das mit Hilfe des Magnetfeldes eines Dauermagneten betätigbare Hilfsventil eine einfache, robuste und platzsparende Ausbildung der Vorrichtung. Anstatt eines mechanischen Uhrwerks kann auch ein elektrisches, quarzgesteuertes, z.B. aus einer Batterie gespeistes Uhrwerk eingesetzt werden, wobei dann zweckmässig als Drucksensor ein elektromechanischer Druckwandler verwendet werden kann.

Vorteilhaft kann das Korrekturglied als Reibradgetriebe ausgebildet sein oder eine Vorrichtung zur Veränderung der Frequenz des Unruhgliedes des Uhrwerks beinhalten. Besonders kompakt und raumsparend kann das Korrekturglied ausgebildet werden, wenn zur Erfassung des Wasserdrucks eine Bourdon- oder Rohrfeder vorgesehen wird. Durch die analog zum Wasserdruck erfolgende Auslenkung der Feder kann über das Unruhglied oder Hemmwerk die Laufdauer des Uhrwerks entsprechend dem Wasserdruck verändert werden.

Ausführungsbeispiele der Erfindung sind in der Zeichnung dargestellt und werden im folgenden näher beschrieben. Es zeigt

Figur 1 eine in schematischer Weise dargestellte Vorrichtung zur Füllmengensteuerung teilweise geschnitten;

Figur 2 eine andere Vorrichtung zur Füllmengensteuerung teilweise geschnitten;

Figur 3 ein erstes Ausführungsbeispiel der Füllmengensteuervorrichtung nach Figur 2 im Längsschnitt mit geschlossenem Ventil;

Figur 4 die Füllmengensteuervorrichtung gemäss Figur 3 mit geöffnetem Ventil;

Figur 5 ein anderes Ausführungsbeispiel der Füllmengensteuervorrichtung nach Figur 2 im Längsschnitt mit geschlossenem Ventil;

Figur 6 die Füllmengensteuervorrichtung gemäss Figur 5 im Längsschnitt mit geöffnetem Ventil;

Figur 7 einen Schnitt durch die Füllmengensteuervorrichtung in der Ebene VI der Figur 5;

Figur 8 einen Schnitt durch die Füllmengensteuervorrichtung gemäss Figur 6 in der Ebene VII.

Der Einfachheit halber sind bei den beiden Ausführungsbeispielen in der Zeichnung gleiche oder entsprechende Elemente mit jeweils gleichen Bezugszeichen versehen.

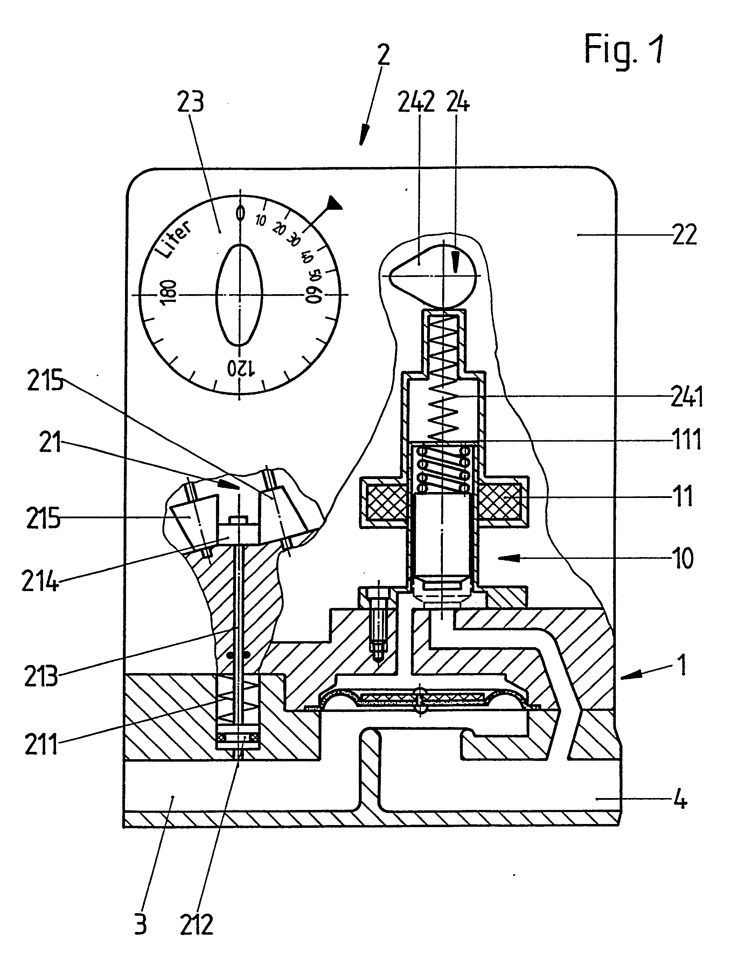

Die in Figur 1 in schematischer Weise gezeigte Füllmengensteuerung besteht aus einem Ventil 1 und einem mechanischen Uhrwerk 2. Das Ventil 1 ist mit einem Wassereinlass 3 und einem Wasserauslass 4 versehen und wird mit Hilfe eines Steuerventils 10 betätigt.

Das Steuerventil 10 ist gekapselt angeordnet und wird mit Hilfe eines auf der Kapsel verschiebbar angeordneten Dauermagneten 11 in die Offenoder Schliessstellung bewegt. Der Dauermagnet 11 ist in einem Führungsgehäuse 111 gekapselt angeordnet.

Das Ventil 1 ist dabei in einem Gehäuse 22 des Uhrwerks 2 integriert. Das Uhrwerk 2 ist mit Hilfe einer Mengenwahlscheibe 23 aufziehbar.

Zur genauen Bemessung der Füllmenge ist ein Korrekturglied 21 in dem Uhrwerk 2 ausgebildet, das in Abhängigkeit vom herrschenden Wasserdruck die Ablaufgeschwindigkeit der Zeitsteuerung verändert. Das Korrekturglied 21 wird von einem Kolben 212 gebildet, dessen eine Stirnseite vom Druck des durchströmenden Wassers beaufschlagt ist. Der Kolben 212 ist axial verschiebbar in einem Gehäuse 22 gedichtet gelagert und mit Hilfe einer Feder 211 gegen den Wasserdruck gestrammt. An dem Kolben 212 ist an der Rückseite eine Kolbenstange 213 ausgebildet, die an ihrem Endbereich ein Reibrad 214 trägt, welches in Abhängigkeit vom Wasserdruck über zwei Kegelräder 215 das Übersetzungsverhältnis im Uhrwerk entsprechend den Druckänderungen des durchfliessenden Wassers verändert.

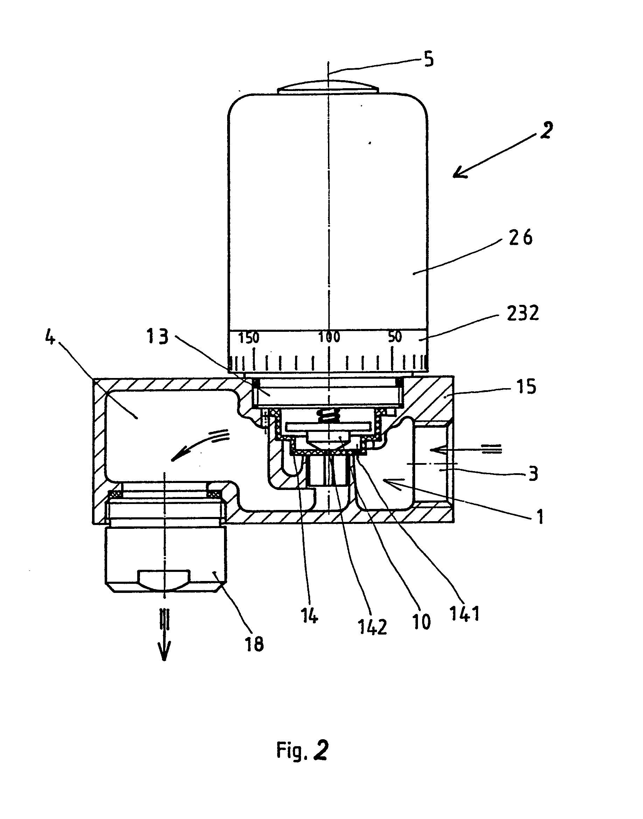

Die Füllmengensteuerung hat folgende Wirkungsweise: Mit der Mengenwahlscheibe 23 kann die Auslaufmenge durch Drehung eingestellt werden, wobei gleichzeitig das Uhrwerk 2 aufgezogen wird. In der Figur 2 der Zeichnung ist die Mengenwahlscheibe 23 auf dreissig Liter eingestellt. Die Stellbewegung des Steuerventils 10 wird hierbei von einer Nockenwelle 24 über einen Nocken 242 auf das Führungsgehäuse 111 des Dauermagneten 11 übertragen, wobei das Gehäuse 22 mit einer Feder 241 gegen den Nocken 242 gestrammt ist. Nach dem Auslauf von dreissig Litern Wasser ist der Nocken 242 von dem Uhrwerk 2 soweit verdreht worden, dass nunmehr der Dauermagnet 11 abgesenkt und somit das Steuerventil 10 abgesperrt ist, so dass anschliessend der Wasserdurchfluss durch das Ventil 1 unterbrochen wird. Treten nun während des Auslaufvorgangs Druckveränderungen in dem zuströmenden Wasser auf, so erfährt das Reibrad 214 durch den Kolben 212 eine axiale Verschiebung und bewirkt somit die erforderliche Veränderung des Übersetzungsverhältnisses zwischen dem Uhrwerk 2 und der Nockenwelle 24.

Eine weitere Vorrichtung zur Füllmengensteuerung ist in der Figur 2 gezeigt. Die Vorrichtung zur Füllmengensteuerung ist dabei in einem Wasserauslaufrohr, wie es bei Wassermischventilen usw. verwendet wird, angeordnet. Das Wasser tritt hierbei in der Mischbatterie in den Wassereinlass 3 des als Ventilgehäuse 15 ausgebildeten Auslassrohres ein. Senkrecht zu der Achse der Wassereinlassöffnung 3 ist auf einer Achse 5 die Vorrichtung zur Füllmengensteuerung ausgebildet, wobei in dem Ventilgehäuse 15 ein als Servoventil ausgebildetes Ventil 1 mit einem Ventildeckel 13 eingeschraubt ist. Der Ventildeckel 13 schliesst den wasserführenden Raum nach aussen dicht ab. Als Hauptverschlussglied des Ventils 1 ist eine Topfmembran 14 zwischen den Schultern des Ventilgehäuses 15 und dem Ventildeckel 13 eingespannt und weist stromaufwärts eine Drosselbohrung 141 sowie eine Steuerbohrung 142, die koaxial zur Achse 5 angeordnet ist, auf. Die Steuerbohrung 142 kann mit dem federgestrammten Steuerventil 10 durch die Einwirkung eines Magnetfeldes geöffnet oder geschlossen werden. Oberhalb des Ventildeckels 13 ist ein Stellglied 26 mit einer Skala 232 angeordnet, mit dem durch ein Verdrehen und/oder axiales Verschieben ein von einem Dauermagneten 11 gebildeter Schalter das Ventil 1 in Offenstellung gebracht und gehalten werden kann, bis die auf der Skala eingestellte Wassermenge durch den Wasserauslass 4 und das Auslaufmundstück 18 ausgetreten ist. Die Ausströmdauer wird von einem durch die Drehbewegung gespannten Uhrwerk, welches koaxial zur Achse 5 auf dem Ventildeckel 13 befestigt ist, bestimmt, wobei die Laufdauer des Uhrweks in Abhängigkeit von dem herrschenden Wasserdruck mit Hilfe einer Bourdon- oder Rohrfeder über das Unruhglied oder Hemmwerk des Uhrwerks entsprechend beeinflusst wird.

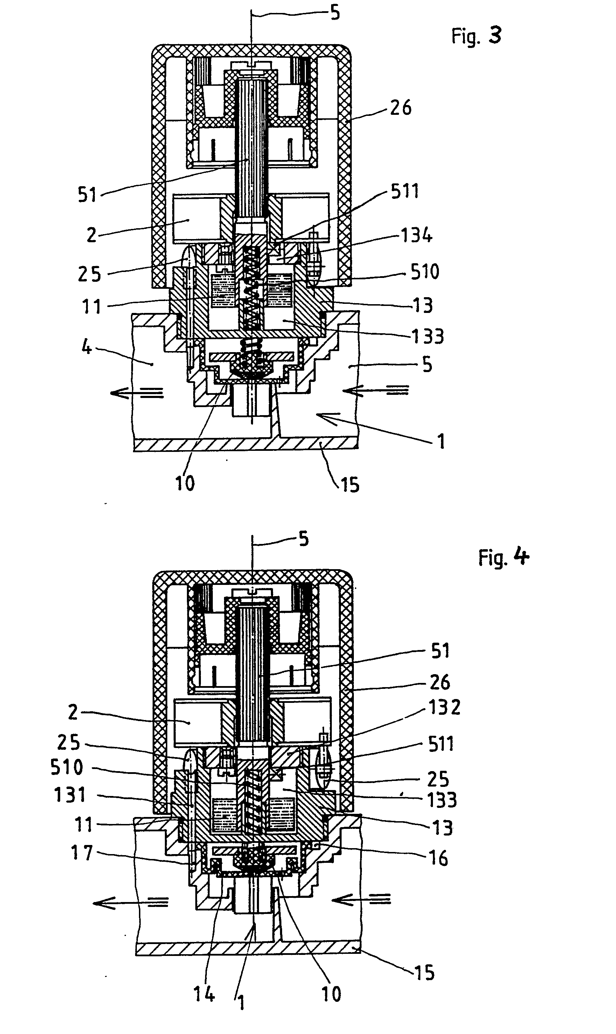

In den Figuren 3 und 4 ist ein Ausführungsbeispiel gezeigt, bei dem das Ventil 1 von einem axial bewegbaren Dauermagneten 11 betätigt wird. In Figur 3 befindet sich die Vorrichtung in Schliessstellung, in Figur 4 in Offenstellung.

In dem Ventildeckel 13 ist an der vom Wasser abgekehrten Stirnseite eine Kammer 133 ausgebildet, in der eine Stellspindel 51 drehbar und axial verschiebbar gelagert ist. Am inneren Ende der Stellspindel 51 ist der Dauermagnet 11 angeordnet, wobei die Stellspindel 51 durch eine Feder 510 mit einem radial vorkragenden Rastglied 511 gegen eine am Ventildeckel 13 z.B. mit einer Radialschraube 19 gehalterte Anschlagscheibe 132 gestrammt wird. Oberhalb der Anschlagscheibe 132 ist das Uhrwerk 2 mit dem Gehäuse befestigt und die Stellspindel 51 mittels Riefenverzahnung axial verschiebbar mit dem als Hohlwelle ausgebildeten Hauptrad des Uhrwerks gekuppelt. Am äusseren Ende der Stellspindel 51 ist das Stellglied 26 befestigt.

Zur Steuerung der Laufzeit des Uhrwerks in Abhängigkeit vom herrschenden Wasserdruck in dem Ventilgehäuse 15 ist ausserdem an einer äusseren Mantelfläche des Ventildeckels 13 unterhalb des Uhrwerks 2 eine Rohrfeder 25 angeordnet. Die Rohrfeder 25 ist an dem einen Endbereich an dem Ventildeckel 13 angelötet und über einen Kanal 131 mit dem durchströmenden Wasser verbunden, während sie andererseits mit dem freien Ende an das Unruhglied oder Hemmwerk des Uhrwerks 2 zur Steuerung der Ablaufgeschwindigkeit in Abhängigkeit vom herrschenden Wasserdruck gekoppelt ist. Damit der Kanal 131 in jeder Drehstellung des Ventildeckels 13 mit dem Inneren des Ventilgehäuses 15 verbunden werden kann, ist die Topfmembran 14 so ausgebildet, dass bei einem Verspannen des äusseren Randes zwischen den Schultern am Ventilgehäuse 15 ein ringförmiger Hohlraum 16 gebildet wird, von dem eine Bohrung 17 ins Innere des Ventilgehäuses 15 führt.

Die Vorrichtung hat folgende Wirkungsweise:

In der in Figur 3 gezeigten Stellung befindet sich die Vorrichtung in Ruhestellung, d.h. das Ventil 1 ist geschlossen. Wird nun mit dem Stellglied 26 die Stellspindel 51 axial in den Ventildeckel 13 entgegen der Kraft der Feder 510 geschoben, so gelangt der Dauermagnet 11 in die Nähe des Steuerventils 10 und hebt dieses entgegen der Federkraft von der Steuerbohrung 142 der Topfmembran 14 ab, so dass nunmehr die gesamte Membran durch den Wasserdruck vom Ventilsitz abgehoben und somit der Durchfluss freigegeben wird. Durch die Axialbewegung ist das Rastglied 511 aus einer Aussparung 134 in der Anschlagscheibe 132 freigekommen, so dass nunmehr, entsprechend der gewünschten Füllmenge, mit dem Stellglied 26 die Stellspindel 51 verdreht werden kann. Durch die Drehung wird gleichzeitig die Feder des Uhrwerks 2 gespannt. Nach dem Einstellvorgang gelangt nunmehr das Rastglied 511 an der unteren Stirnseite der Anschlagscheibe 132 zur Anlage und hält den Dauermagneten 11 in dieser Axiallage, wobei von dem Uhrwerk 2, durch die Rohrfeder 25 korrigiert, die Stellspindel 51 in die Ausgangs- oder Ruhestellung zur Aussparung 134 zurückgedreht wird. Sobald die Aussparung 134 erreicht ist, drückt die Feder 510 die Stellspindel 51 mit dem Dauermagneten 11 in die Aussparung 134 zurück (siehe Figur 3), wodurch der Dauermagnet 11 von dem Steuerventil 10 entfernt wird, so dass dieses die Steuerbohrung 142 schliesst und somit die Topfmembran 14 den Wasserdurchfluss im Ventilgehäuse 15 absperrt.

Damit der Wasserfüllvorgang vorzeitig unterbrochen werden kann, ist ausserdem eine Rutschkupplung in dem Uhrwerk 2 ausgebildet, so dass nach der Einstellung einer bestimmten Wasserauslaufmenge das Stellglied 26 von Hand in die Nullstellung zurückgedreht werden kann. Ausserdem kann die Vorrichtung in eine Dauerauslaufstellung bewegt werden, wenn die Stellspindel 51 entgegen der Einstelldrehrichtung über die Null- oder Ruhestellung hinaus verdreht wird.

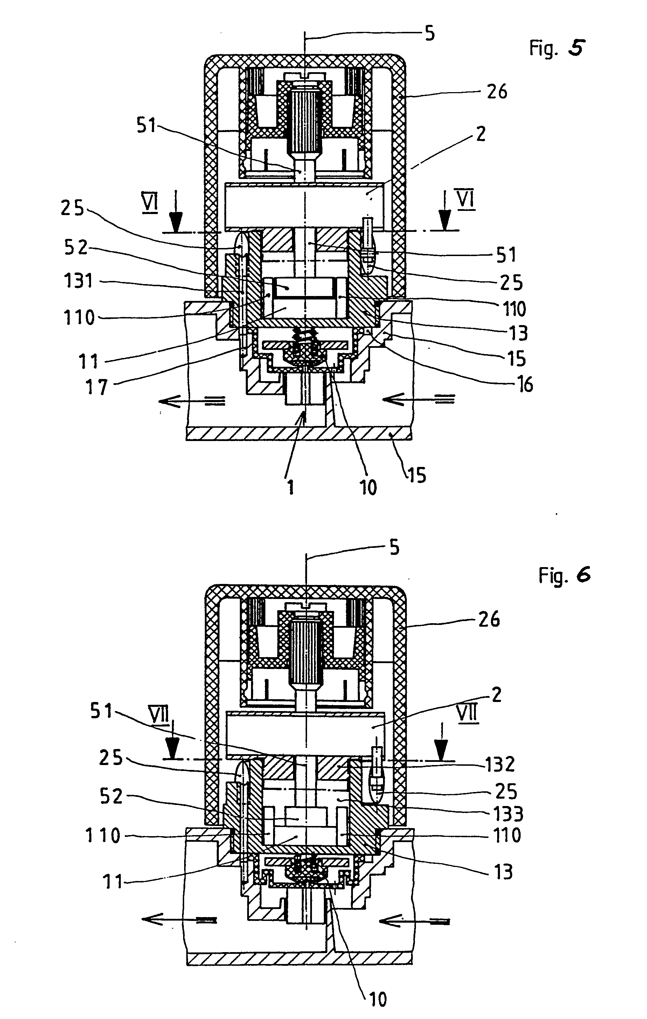

Das in den Figuren 5 bis 8 dargestellte Ausführungsbeispiel unterscheidet sich im wesentlichen von dem vorstehenden Ausführungsbeispiel durch die Ausbildung des Magnetschalters.

In der Kammer 133 des Ventildeckels 13 ist am Grund ein Dauermagnet 11 mit zwei gegenüberliegenden, axial vorkragenden Polschuhen 110 angeordnet. Am inneren Ende der Stellspindel 51 ist eine Fe-Brücke 52 ausgebildet und wirkt über die Polschuhe 110 mit dem Dauermagneten 11 zusammen. Die Stellspindel 51 ist dabei axial festliegend und nur drehbar gelagert.

Die Vorrichtung hat folgende Wirkungsweise:

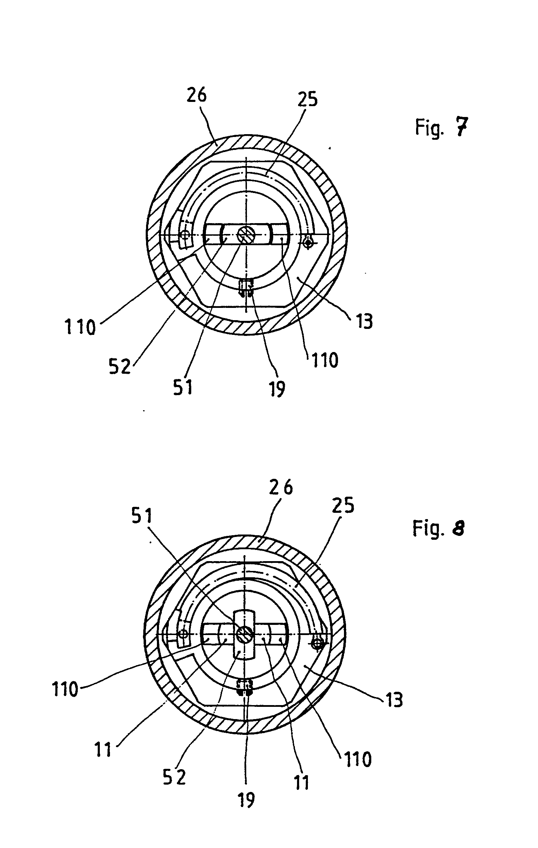

Die in der Figur 5 und Figur 7 gezeigte Stellung zeigt die Vorrichtung in Ruhestellung bzw. das Ventil 1 befindet sich in Schliessstellung. In dieser Stellung befindet sich die Fe-Brücke 52 mit den Polschuhen 110 in Verbindung, so dass das Magnetfeld vom Dauermagneten 11 über die Polschuhe 110 und die Fe-Brücke 52 abgelenkt wird und somit das Steuerventil 10 in Schliessstellung verharrt.

Wird nun mit dem Stellglied 26 die Stellspindel 51 verdreht, so wird die Ablenkung des Magnetfeldes durch die Fe-Brücke 52 vermindert und das Steuerventil 10 geöffnet, so dass hiernach der Wasserdurchfluss freigegeben wird. Das Uhrwerk 2 ist hierbei so ausgelegt, dass von der Null- bzw. Ruhestellung der Vorrichtung nach einem Einschaltdrehwinkel von ca. 30°, bei dem der Dauermagnet 11 das Steuerventil 10 öffnet, die Einstellung der Füllmenge durch weitere Drehung der Stellspindel 51 erfolgt und die zeitgesteuerte, durch die Rohrfeder 25 korrigierte Rückführung der Stellspindel 51 nur bis zum Einschaltdrehwinkel erfolgt. Danach wird die Stellspindel 51 von dem Uhrwerk 2 sprungartig in die Nullstellung zurückgeführt und das Ventil 1 geschlossen.

Zweckmässig ist das Uhrwerk 2 so ausgebildet, dass der die Fe-Brücke 52 tragende Teil der Stellspindel 51 während der Bewegung im Einschaltdrehwinkel von einem Schaltgetriebe um 90° gedreht wird und danach in dieser Drehstellung verharrt, bis das Stellglied 26 in den Bereich des Einschaltdrehwinkels zurückgeführt ist. In der weiteren Ausgestaltung entspricht das Ausführungsbeispiel dem in den Figuren 2 bis 4 beschriebenen.

## Patentansprüche

1. Vorrichtung zur Steuerung der Füllmenge in Sanitäranlagen, insbesondere für Badewannen, wobei ein Servoventil in der Wasserzulaufleitung angeordnet und mit einem von Hand betätigbaren Stellglied der Füllvorgang einleitbar sowie die Öffnungsdauer des Ventils (1) von einem, in seiner Laufdauer einstellbaren Uhrwerk (2) oder Federantrieb über einen bestimmten Zeitraum einstellbar ist, dadurch gekennzeichnet, dass das Uhrwerk (2) oder der Federantrieb mit einem Korrekturglied (21) versehen ist, das in Abhängigkeit des herrschenden Wasserdrucks die Ablaufgeschwindigkeit der Zeitsteuerung verändert, und das Servoventil als Membranventil ausgebildet und ein Steuerventil (10) enthält, das von einem verschiebbar zugeordneten Dauermagneten (11) über das Uhrwerk (2) stellbar ist.

2. Vorrichtung nach Anspruch 1, dadurch gekennzeichnet, dass das Korrekturglied (21) als Reibradgetriebe ausgebildet ist, wobei der Wasserdruck einen entgegen der Kraft der Feder (211) verschiebbaren Kolben (212) beaufschlagt, an dessen Kolbenstange (213) ein Reibrad (214) ausgebildet ist und mit Kegelrädern (215) zusammenwirkt.

3. Vorrichtung nach Anspruch 1, dadurch gekennzeichnet, dass als Korrekturglied eine Vorrichtung zur Veränderung der Frequenz des Unruhglieds in dem Uhrwerk (2) vorgesehen ist.

4. Vorrichtung nach Anspruch 1, dadurch gekennzeichnet, dass das Uhrwerk (2) über eine Nokkenwelle (24) den Dauermagneten (11) verschiebt und der Dauermagnet (11) mit seinem zugehörigen Führungsgehäuse (111) von einer Feder (241) gegen die Nockenwelle (24) gestrammt ist.

5. Vorrichtung nach Anspruch 1, dadurch gekennzeichnet, dass als Korrekturglied eine Bremsvorrichtung vorgesehen ist, die in Abhängigkeit vom Wasserdruck die Ablaufgeschwindigkeit des Federantriebes im gewünschten Sinne beeinflusst.

6. Vorrichtung nach Anspruch 1, dadurch gekennzeichnet, dass als Uhrwerk ein batteriebetriebenes, quarzgesteuertes Uhrwerk eingesetzt ist, bei dem das Drucksignal über ein elektrisches Netzwerk das Schaltintervall korrigiert.

7. Vorrichtung nach den Ansprüchen 1 und 6, dadurch gekennzeichnet, dass als Drucksensor ein elektromechanischer Wandler eingesetzt ist, dessen Messsignal die Zeitablaufsteuerung im gewünschten Sinne korrigiert.

8. Vorrichtung nach wenigstens einem der Ansprüche 1 bis 7, dadurch gekennzeichnet, dass auf einer Achse (5) das Ventil (1) mit dem Uhrwerk (2) oder Federantrieb sowie das Korrekturglied (21) und das Stellglied (26) angeordnet sind.

9. Vorrichtung nach Anspruch 8, dadurch gekennzeichnet, dass als Korrekturglied (21) eine Bourdon- oder Rohrfeder (25) vorgesehen ist, die einerseits am Ventildeckel (13) befestigt sowie über einen Kanal (131) mit dem durchströmenden Wasser verbunden ist und andererseits mit dem freien Ende an das Unruhglied oder Hemmwerk des Uhrwerks (2) zur Steuerung der Ablaufgeschwindigkeit gekoppelt ist.

10. Vorrichtung nach Anspruch 8 oder 9, dadurch gekennzeichnet, dass auf der Achse (5) eine Stellspindel (51) konzentrisch im Ventildeckel (13) begrenzt dreh- und verschiebbar gelagert und von einer Feder (510) axial mit einem Rastglied (511) gegen eine Anschlagscheibe (132) gestrammt ist, dass an der Stellspindel (51) in einer Kammer (133) des Ventildeckels (13) ein Dauermagnet (11) befestigt ist, mit dem durch axiales Verschieben das Ventilverschlussglied mit Hilfe der Magnetkraft in eine Öffnungs- oder Schliessstellung bewegbar ist, und die Stellspindel (51) ausserdem mit einem am Ventildeckel (13) befestigten Uhrwerk (2) drehfest gekoppelt ist, wobei die Anschlagscheibe (132) mit einer Aussparung (134) für die Aufnahme des Rastgliedes (511) in der Ventilschliess- und Ruhestellung der Vorrichtung versehen ist, derart, dass durch die Axialbewegung entgegen der Kraft der Feder (510) das Ventil (1) geöffnet und in dieser Stellung die Stellspindel (51) verdrehbar zur Einstellung der gewünschten Füllmenge ist, wobei durch die Drehung die Uhrwerksfeder entsprechend gespannt und von der Stellspindel (51) durch das Rastglied (511) das Ventil (1) in Offenstellung gehalten wird, so dass hiernach die Stellspindel (51) vom Uhrwerk (2) zeitgesteuert in die Ruhestellung zurückgedreht und danach von der Feder (510) axial in die Aussparung (134) geschoben wird und das Ventil (1) schliesst.

11. Vorrichtung nach Anspruch 8 oder 9, dadurch gekennzeichnet, dass auf der Achse (5) eine drehbare Stellspindel (51) angeordnet und durch das auf einem Ventildeckel (13) befestigte Uhrwerk (2) geführt und mit dem Räderwerk gekoppelt ist, dass in einer konzentrischen Kammer (131) des Ventildeckels (13) ein Dauermagnet (11) mit Polschuhen (110) angeordnet ist, dessen Kraftfeld das Ventil (1) in Offenstellung hält, und ein Teil der Stellspindel (51) in die Nähe des Dauermagneten (11) geführt ist, wobei an der Stirnseite der Stellspindel (51) eine Fe-Brücke (52) ausgebildet ist, mit der das Magnetfeld über die Polschuhe (110) ablenkbar ist, so dass in dieser Stellung das Ventil (1) die Schliessstellung einnimmt, und das Uhrwerk (2) so ausgelegt ist, dass von der Schliessstellung des Ventils (1) bzw. Nullstellung der Vorrichtung nach einem Einschaltdrehwinkel von ca. 30°, bei dem der Dauermagnet (11) das Ventil (1) öffnet, die Einstellung der Füllmenge durch weitere Drehung der Stellspindel (51) erfolgt und die zeitgesteuerte Rückführung der Stellspindel (51) nur bis zum Einschaltdrehwinkel erfolgt, danach rückt die Stellspindel (51) beschleunigt oder sprungartig in die Nullstellung und schliesst das Ventil (1).

12. Vorrichtung nach wenigstens einem der Ansprüche 1 bis 11, dadurch gekennzeichnet, dass das Ventil (1) ein Servoventil ist, dessen Hauptverschlussglied als Topfmembran (14) ausgebildet ist, wobei der äussere, zwischen Schultern des Ventilgehäuses (15) und des Ventildeckels (13) eingespannte Rand der Topfmembran (14) so bemessen ist, dass ein ringförmiger Hohlraum (16) gebildet ist, der einerseits über eine Bohrung (17) mit dem durchströmenden Wasser und andererseits über den Kanal (131) im Ventildeckel (13) mit der Rohrfeder (25) verbunden ist.

13. Vorrichtung nach wenigstens einem der Ansprüche 1 bis 12, dadurch gekennzeichnet, dass die Stellspindel (51) über eine Rutschkupplung mit dem Uhrwerk (2) verbunden ist.

14. Vorrichtung nach Anspruch 13 dadurch gekennzeichnet, dass die Stellspindel (51) entgegen der Einstelldrehrichtung über die Null- oder Ruhestellung in eine Dauerauslaufstellung bewegbar ist.

**Claims**

1. A device for controlling the filling amount in sanitary installations, in particular for bath tubs, wherein a servo valve is arranged in the water intake pipe and the filling operation can be initiated using a manually operable control element and the opening time of the valve (1) is adjustable over a specific period of time by a spring drive or by a clockwork mechanism (2), the running duration of which is adjustable, characterized in that the clockwork mechanism (2) or the spring drive is provided with a correcting member (21) which alters the run-down speed of the time control in dependence on the prevailing water pressure, and the servo valve is constructed as a diaphragm valve and contains a control valve (10) which is adjustable by a displaceably allocated permanent magnet (11) by way of the clockwork mechanism (2).

2. A device according to claim 1, characterized in that the correcting element (21) is constructed as a friction gearing, wherein the water pressure acts on a piston (212) displaceable against the force of the spring (211), on the piston rod (213) of which piston there is constructed a frictional wheel (214) which co-operates with bevel wheels (215).

3. A device according to claim 1, characterized in that, as correcting element, there is provided a device for altering the frequency of the balance member in the clockwork mechanism (2).

4. A device according to claim 1, characterized in that the clockwork mechanism (2) displaces the permanent magnet (11) by way of a camshaft (24) and the permanent magnet (11) is held tightly with its associated guide housing (111) against the camshaft (24) by a spring (241).

5. A device according to claim 1, characterized in that, as correcting element, there is provided a braking device which influences the run-down speed of the spring drive in the desired direction in dependence on the water pressure.

6. A device according to claim 1, characterized in that, as clockwork mechanism, there is used a battery-driven, quartz-controlled clockwork mechanism in which the pressure signal corrects the switching interval by way of an electrical circuit.

7. A device according to claims 1 and 6, characterized in that, as pressure sensor, there is used an electromechanical transducer, the measuring signal of which corrects the time run-down control in the desired direction.

8. A device according to at least one of claims 1 to 7, characterized in that the valve (1) with the clockwork mechanism (2) or spring drive and also the correcting element (21) and the control element (26) are arranged on one axis (5).

9. A device according to claim 8, characterized in that, as correcting element (21), there is provided a Bourdon or tube spring (25), which at one end is fastened to the valve cover (13) and is connected to the through-flowing water by way of a channel (131) and at the other end is linked with its free end to the balance member or escapement mechanism of the clockwork mechanism (2) for control of the run-down speed.

10. A device according to claim 8 or 9, characterized in that on the axis (5) an adjusting spindle (51) is mounted concentrically in the valve cover (13) such that it is limitedly displaceable and rotatable and is held tightly by a spring (510) axially with a catch member (511) against a stop disc (132), to the adjusting spindle (51) in a chamber (133) of the valve cover (13) there is fastened a permanent magnet (11) with which, by axial displacement, the valve closing member is movable with the assistance of the magnetic force into an open or closed position, and the adjusting spindle (51) is additionally rigidly coupled to a clockwork mechanism (2) fastened to the valve cover (13), wherein the stop disc (132) is provided with a recess (134) for receiving the catch member (511) in the valve-closed position and rest position of the device in such a manner that, by the axial displacement against the force of the spring (510), the valve (1) is opened and in this position the adjusting spindle (51) is rotatable for adjusting the desired filling amount, wherein as a result of the rotation the clockwork mechanism spring is correspondingly tensioned and the valve (1) is held in the open position by the adjusting spindle (51) through the catch member (511), so that thereafter the adjusting spindle (51) rotates back into the rest position, time-controlled by the clockwork mechanism (2), and is then pushed by the spring (510) axially into the recess (134) and the valve (1) closes.

11. A device according to claim 8 or 9, characterized in that on the axis (5) there is arranged a rotatable adjusting spindle (51) which is guided by the clockwork mechanism (2) fastened to a valve cover (13) and which is coupled to the gear train, in a concentric chamber (131) of the valve cover (13) there is arranged a permanent magnet (11) with pole shoes (110), the force field of which magnet holds the valve (1) in the open position, and a part of the adjusting spindle (51) is guided into the vicinity of the permanent magnet (11), wherein on the front end of the adjusting spindle (51) there is formed an Fe-bridge (52) with which the magnetic field can be diverted by way of the pole shoes (110) so that in this position the valve (1) assumes the closes position, and the clockwork mechanism (2) is so designed that from the closed position of the valve (1) or neutral position of the device, after a switch-on angle of rotation of about 30°, in which the permanent magnet (11) opens the valve (1), the adjustment of the filling amount is effected by further rotation of the adjusting spindle (51) and the time-controlled restoration of the adjusting spindle (51) is effected only as far as the switch-on angle of rotation, after which time the adjusting spindle (51) returns acceleratedly into the switch-off position and closes the valve (1).

12. A device according to at least one of claims 1 to 11, characterized in that the valve (1) is a servo valve, the main closure member of which is constructed as a cup diaphragm (14), wherein the outer edge of the cup diaphragm (14) clamped between shoulders of the valve housing (15) and the valve cover (13) is so dimensioned that a ringshaped cavity (16) is formed, which cavity is connected on one side by way of a bore (17) to the through-flowing water and on the other side by way of the channel (131) in the valve cover (13) to the tube spring (25).

13. A device according to at least one of claims 1 to 12, characterized in that the adjusting spindle (51) is connected to the clockwork mehanism (2) by way of a slipping clutch.

14. A device according to claim 13, characterized in that the adjusting spindle (51) is movable against the switch-on direction of rotation through the switch-off or rest position into a permanent delivery position.

**Revendications**

1. Dispositif pour commander le volume de remplissage dans une installation de sanitaire, en particulier pour des baignoires, où une servo-soupape est placée dans la conduite d'arrivée d'eau et comportant un élément de réglage du processus de remplissage actionnable manuellement de façon déclenchable ainsi que la durée d'ouverture de la valve (1) dont une minuterie (2) réglable en parcours ou un entraînement à ressort peut être réglé sur un laps de temps déterminé, caractérisé en ce que la minuterie (2) ou le ressort d'entraînement sont munis d'un dispositif d'introduction du facteur correctif (21) qui en fonction de la pression d'eau existante modifie la vitesse du parcours de la commande de temps et en ce que la servo-soupape est constituée d'une soupape à membrane et contient une soupape de commande 10 qui est réglable par un aimant permanent 11 disposé de façon déplaçable sur la minuterie (2).

2. Dispositif selon la revendication 1, caractérisé en ce que le dispositif d'introduction du facteur correctif (21) est formé d'un engrenage à friction, où la pression de l'eau agit sur un piston (212) déplaçable à l'encontre de la force d'un ressort (211) sur la tige de piston (213) duquel est formé un galet de friction (214) et coopère avec des pignon coniques (215).

3. Dispositif selon la revendication 1, caractérisé en ce qu'on prévoit comme dispositif d'introduction du facteur correctif un système de variation de la fréquence du balancier dans la minuterie (2).

4. Dispositif selon la revendication 1, caractérisé en ce que la minuterie (2) déplace l'aimant (11) à l'aide d'un arbre à cames (24), et l'aimant permanent (11) avec son propre carter de guidage (111) est chargé par un ressort (241) contre l'arbre à cames (24).

5. Dispositif selon la revendication 1, caractérisé en ce qu'on prévoit comme dispositif d'introduction du facteur correctif un système de freinage qui agit sur la vitesse de déroulement de l'entraînement à ressort dans le sens souhaité en fonction de la pression de l'eau.

6. Dispositif selon la revendication 1, caractérisé en ce qu'on utilise comme minuterie une montre à quartz alimentée par pile, sur laquelle le signal de pression corrige la fréquence par un réseau électrique.

7. Dispositif selon les revendications 1 et 6, caractérisé en ce qu'on utilise comme baromètres un convertisseur électro-mécanique dont le signal de mesure corrige la commande d'écoulement du temps dans le sens souhaité.

8. Dispositif selon l'une au moins des revendications 1 à 7, caractérisé en ce que la soupape 1 avec la minuterie (2) ou le ressort d'entraînement ainsi que le dispositif d'introduction du facteur correctif (21) et l'élément de réglage (26) sont placés sur un axe 5.

9. Dispositif selon la revendication 8, caractérisé en ce qu'on utilise comme dispositif d'introduction du facteur correctif (21) un tube de Bourdon ou tube élastique (25) qui est fixé d'un côté sur le couvercle de soupape (13) et relié par un canal (131) à l'eau en écoulement et d'un autre côté à l'extrémité libre sur le balancier ou l'arrêt de la minuterie (2) pour la commande de la vitesse de déroulement.

10. Dispositif selon la revendication 8 ou 9, caractérisé en ce que sur l'axe (5) est supporté de façon à pouvoir se déplacer et tourner de façon limitée concentriquement dans le carter de soupape (13) une broche de réglage (51) qui est chargée par un ressort (510) muni axialement d'un élément de friction (511), contre un disque de butée (132), en ce que sur la broche de réglage (51) l'aimant permanent (11) est fixé dans une chambre (133) du couvercle de soupape (13), avec lequel par déplacement axial de l'élément de fermeture de la soupape, sous l'action de la force magnétique, peut se déplacer en position d'ouverture ou de fermeture, et l'arbre est en outre couplé de façon à tourner solidairement avec la minuterie (2) fixée sur le couvercle de soupape (13), où le disque de butée (132) comportant une cavité (134) pour la réception de l'élément de friction (511) est prévu dans la position de fermeture et de repos du dispositif, de telle sorte que par le déplacement axial à l'encontre de la force du ressort (510), la soupape (1) s'ouvre et dans cette position on peut faire tourner la broche de réglage (51) pour régler le volume de remplissage désiré, où par la rotation, le ressort de la minuterie est tendu de façon correspondante et la soupape (1) est maintenue en position ouverte par la broche de réglage (51) grâce à l'élément de friction (511), de sorte que d'après cela, la broche de réglage (51) commandée en durée à partir de la minuterie (2) soit ramené à la position de repos et ensuite soit introduit axialement sous l'action du ressort (510) dans la cavité (134) et ferme la soupape (1).

11. Dispositif selon la revendication 8 ou 9, caractérisé en ce que sur l'axe (5) est placé une broche de réglage (51) pouvant tourner et par lequel est guidée une minuterie (2) fixée sur le couvercle de soupape (13) et qui est couplé à un engrenage, en ce que dans une chambre concentrique (131) du couvercle de soupape (13) est placé un aimant permanent (11) avec des pièces polaires (110) dont le champ magnétique maintient la soupape (1) en position ouverte et une partie de l'arbre de réglage (51) est guidé au voisinage de l'aimant permanent (11), où sur le côté frontal de l'arbre de réglage (51) est formé un pont en fer (52) grâce auquel le champ magnétique peut être dévié par les pièces polaires (110), de sorte que dans cette position la soupape (1) se trouve en position de fermeture et la minuterie est réglée de telle sorte qu'à partir de la position de fermeture de la soupape (1) ou de la position zéro du dispositif après un angle de rotation d'environ 30°, ce par quoi l'aimant permanent (11) ouvre la soupape (1), le réglage du volume de remplissage s'effectue par une rotation plus poussée de la broche de réglage (51) et le retour commandé par le temps de ce dernier se produit seulement jusqu'à l'angle de rotation initial, la broche de réglage (51) revient ensuite de façon accélérée ou par effet de ressort au pont zéro et ferme la soupape (1).

12. Dispositif selon au moins une des revendications 1 à 11, caractérisé en ce que la soupape (1) est une servo-soupape dont l'élément de fermeture principal est sous forme d'une membrane galbée (14), où la bordure extérieure tendue entre des épaulement du carter de soupape (15) et le couvercle de soupape (13) est d'une dimension telle, qu'il se forme une cavité annulaire (16) qui est reliée d'un côté par un alésage (17) à l'eau en écoulement et de l'autre côté par le canal (131) dans le couvercle de soupape (13) au tube de Bourdon (25).

13. Dispositif selon au moins une des revendications 1 à 12, caractérisé en ce que la broche de réglage (51) est relié par un joint glissant à la minuterie (2).

14. Dispositif selon la revendication 13, caractérisé en ce que la broche de réglage (51) est mobile à l'encontre du sens de rotation de réglage en position zéro ou de repos dans une position de sortie permanentes.

Fig. 1

Fig. 2

11

Fig. 3

Fig. 4

Fig. 5

Fig. 6

Fig. 7

Fig. 8